# NEUE EUROPÄISCHE PATENTSCHRIFT

(11) **EP 0 321 684 B2**
(45) Veröffentlichungstag und Bekanntmachung des Hinweises auf die Entscheidung über den Einspruch: **17.03.1993**
(45) Hinweis auf die Patenterteilung: 03.10.1990
(21) Anmeldenummer: 88118293.5
(22) Anmeldetag: 03.11.1988
(51) Int. Cl.: C10J 3/78, C10J 3/86, F22B 1/18

(54) **Druckbehälter, wie Druckreaktor, Druckabhitzekessel oder dgl.**
Pressure container, such as a pressure reactor or pressure waste heat boiler
Récipient à pression, comme un réacteur ou une chaudière de récupération à pression

(30) Priorität: 16.12.1987 DE 3742644
(43) Veröffentlichungstag der Anmeldung: 28.06.1989
(73) Patentinhaber: Krupp Koppers GmbH, 45143 Essen (DE)
(72) Erfinder: Köhnen, Klaus, D-4330 Mülheim/Ruhr (DE)

(56) Entgegenhaltungen:
- WO-A-81/02743
- US-A- 2 547 589
- VDI-Berichte Nr.322, 1978, S. 89-96

## Beschreibung

Die Erfindung betrifft einen Druckbehälter, wie Druckreaktor, Druckabhitzekessel oder dgl., bestehend aus einem Druckmantel und innerhab desselben angeordneter Wärmetauschffäche, die als Rohrwandkonstruktion ausgebildet und in einzelne Kühlkreisläufe mit separaten Kühlwasser-Zuführungsleitungen und Kühlwasser-Abführungsleitungen unterteilt ist.

Da bei derartigen Einrichtungen Schäden an der Rohrwandkonstruktion, insbesondere aber an den Anschlußstellen der Kühlwasser-Zuführungsleitungen und Kühlwasser-Abführungsleitungen an die Rohre der einzelnen Kühlkreisläufe nicht auszuschließen sind, muß zu Reparaturzwecken eine Zugangsmöglichkeit zu allen Bereichen des Druckbehälterinneren vorgesehen werden.

Eine Möglichkeit, einen solchen Zugang zu schaffen, besteht darin, die Rohrwandkonstruktion mit Zu- und Abführungsleitungen komplett aus dem Druckmantel herauszuziehen. Die betreffenden Schadensstellen konnen dann außerhalb des Druckmantels problemlos bearbeitet werden. Nachteilig ist hierbei jedoch der vergleichsweise große Aufwand, der darin besteht, daß der Druckmantel zunächst geöffnet werden muß, worauf mittels einer eigens hierfür zu installierenden Hebe- und Transporteinrichtung die Rohrwandkonstruktion aus dem Druckmantel entfernt werden kann.

Eine andere Möglichkeit ist die, Reparaturarbeiten im Inneren des Druckmantels auszuführen. Dabei ist zu unterscheiden zwischen Arbeiten im Innenraum der Rohrwandkonstruktion und Arbeiten im Raum zwischen Druckmantel und Rohrwandkonstruktion. Die erstgenannten Arbeiten können im allgemeinen ohne größere Schwierigkeiten durchgeführt werden, da der Innenraum in der Regel hinreichend groß bemessen ist und der Zugang dahin durch Mannlöcher im Druckmantel und Durchtritte in der Rohrwandkonstruktion gegeben ist. Anders sieht es dagegen fürdie Arbeiten im Raum zwischen Druckmantel und Rohrwandkonstruktion aus. Dort ist üblicherweise der Druckmantel so eng um die Rohrwandkonstruktion gelegt, daß ein Zugang zu diesem Raum und ein Aufenthalt darin zu Reparaturzwecken nicht möglich ist. Als Ausweg bliebe die Möglichkeit, den Raum zu vergrößern, d.h. den Durchmesser des Druckmantels größer zu wählen, was wiederum mit ganz beträchtlichen Mehrkosten verbunden wäre.

Der Erfindung liegt daher die Aufgabe zugrunde, den Druckbehälter der eingangs beschriebenen Gattung so auszubilden, daß ein Zugang zu allen reparaturanfälligen Bereichen ohne nennenswerten Mehraufwand möglich ist.

Erfindungsgemäß wird hierzu vorgeschlagen, daß die Anschlüsse der Kühlwasser-Zuführungsleitungen und Kühlwasser-Abführungsleitungen an die Rohre der einzelnen Kühlkreisläufe in an sich bekannterweise jeweils konzentriert in einem oder mehreren engen Bereichen der Rohrwandkonstruktion eines Kühlkreislaufes zwischen der Rohrwandkonstruktion und dem Druckmantel angeordnet sind, wobei die Anschlüsse der Kühlwasser-Zuführungsleitungen und Kühlwasser-Abführungsleitungen vom Innenraum der Rohrwandkonstruktion zu Reparaturzwecken durch Öffnungen zugänglich sind, die durch Heraustrennen eines Teiles der Rohrwandkonstruktion des betreffenden Kühlkreislaufes nahe dem Bereich der konzentrierten Anordnung der Anschlüsse gebildet wird.

Schließlich sind im Druckmantel nahe den Bereichen der konzentrierten Anordnung der Anschlüsse der Kühlwasser-Zuführungsleitungen und Kühlwasser-Abführungsleitungen Inspektionsöffnungen vorgesehen.

Einzelheiten der Erfindung werden im folgenden anhand der Zeichnung beschrieben, die als ein Anwendungsbeispiel einen Druckreaktor zur Vergasung von Kohlenstaub in der Schwebe in schematisch vereinfachter Form darstellt. Hierbei ist
Fig. 1 ein senkrechter Schnitt durch den Druckreaktor und
Fig. 2 ein waagerechter Schnitt nach der Linie A-Ader Fig. 1.

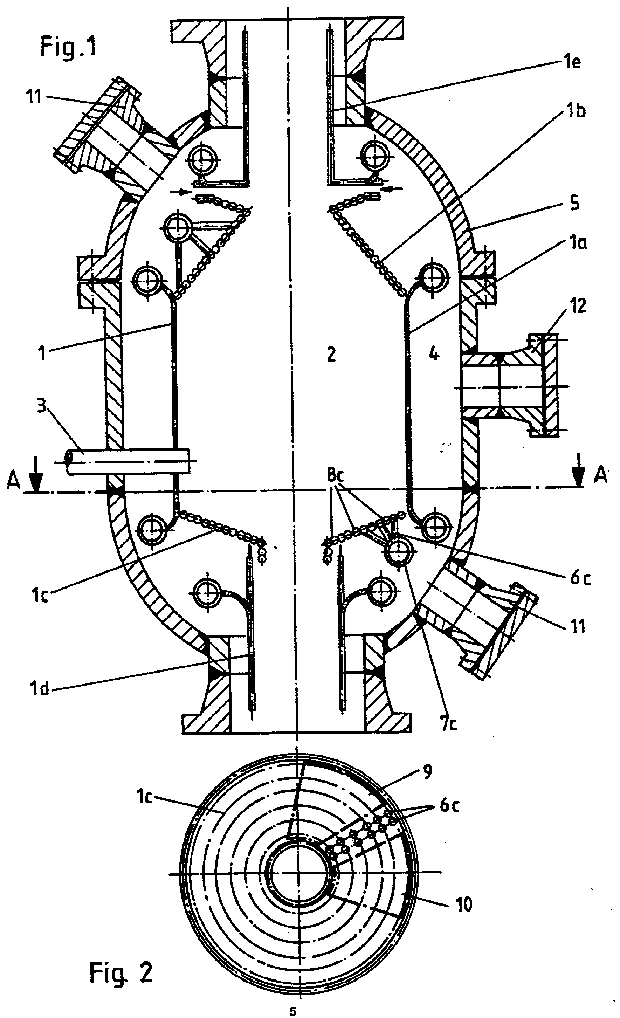

In Fig. 1 ist mit 1 die Rohrwandkonstruktion bezeichnet, deren Innenraum 2 der Vergasungsraum ist. In den Vergasungsraum münden mehrere Brenner 3, von denen in der Zeichnung nur einer dargestellt ist. Die Rohrwandkonstruktion 1 ist unter Belassung eines Ringraumes 4 von einem Druckmantel 5 umgeben.

Die Rohrwandkonstruktion 1 ist zusammengesetzt aus einzelnen Kühlkreisläufen 1a, 1 b, 1c, 1d und 1e. Jeder dieser Kühlkreisläufe weist eine separate Kühlwasser-Zuführungsleitung und eine separate KühlwasserAbführungsleitung auf, die in der Zeichnung nur angedeutet ist. Am Beispiel des Kühlkreislaufes 1c ist die erfindungsgemäße Maßnahme veranschaulicht, wonach die Anschlüsse 6c der Kühlwasser-Zuführungsleitung 7c an die Rohre 8c konzentriert in einem engen Bereich, d.h. nahe beieinander,angeordnet sind. Die Anordnung ermöglicht es, in Nachbarbereichen, die keine Rohranschlüsse aufweisen, Teile der Rohrwandkonstruktion herauszutrennen, die in Fig. 2 mit 9 und 10 bezeichnet und strichpunktiert dargestellt sind. Nach Heraustrennen solcher Teile 9 bzw. 10 ist der Zugang zu den Anschlüssen 6c yom Innenraum 2 frei, und es können von hier aus nunmehr die notwendigen Reparaturarbeiten durchgeführt werden. Nach Beendigung der Reparaturarbeiten kann die zuvor freigelegte Öffnung in der Rohrwandkonstruktion entweder durch das herausgetrennte Teil oder ein entsprechend ausgebildetes neues Teil mittels Schweißung wieder verschlossen werden.

Die Unterteilung der Rohrwandkonstruktion in einzelne Kühlkreisläufe ermöglicht ein schnelles Lokalisieren von Schadensstellen, da jeder Kühlkreislauf separat abgedrückt werden kann und damit der betreffende schadhafte Kühlkreislauf direkt ermittelt werden kann. Danach ist es möglich, mittels am Druckmantel 5 im Bereich konzentrierter Rohranschlusse vorgesehener Inspektionsöffnungen 11 durch Sichtkontakt oder durch Inspektionsgeräte die genaue Schadensstelle festzustellen.

Die Erfindung ermöglicht es ferner, in Bereichen mit hohem Verschleiß, wo keine Rohranschlüsse vorgesehen sind, Teile der Rohrwandkonstruktion herauszutrennen und durch neue Teile zu ersetzen.

Mit 12 ist in Fig. 1 schließlich noch ein Mannloch im Druckmantel 5 bezeichnet, durch das sowie durch einen hier nicht eingezeichneten Durchtritt in der rohrwandkonstruktion der Zugang zum Innenraum 2 zwecks Durchführung dort erforderlicher Reparaturarbeiten gegeben ist.

## Patentansprüche

1. Druckbehälter, wie Druckreaktor, Druckabhitzekessel oder dgl., bestehend aus einem Druckmantel und innerhalb desselben angeordneter Wärmetauschfläche, die als Rohrwandkonstruktion ausgebildet und in einzelne Kühlkreisläufe mit separaten Kühlwasser-Zuführungsleitungen und Kühlwasser-Abführungsleitungen unterteilt ist, dadurch gekennzeichnet, daß die Anschlüsse (6c) der Kühlwasser-Zuführungsleitungen (7c) und Kühlwasser-Abführungsleitungen an die Rohre (8c) dereinzelnen Kühlkreisläufe (1c) in an sich bekannter Weise jeweils konzentriert in einem oder mehreren engen Bereichen der Rohrwandkonstruktion eines Kühlkreislaufes zwischen der Rohrwandkonstruktion und dem Druckmantel angeordnet sind, wobei die Anschlüsse (6c) der Kühlwasser-Zuführungsleitungen (7c) und Kühlwasser-Abführungsleitungen vom Innenraum (2) der Rohrwandkonstruktion (1) zu Reparaturzwecken durch Öffnungen zugänglich sind, die durch Heraustrennen eines Teiles (9, 10) der Rohrwandkonstruktion des betreffenden Kühlkreislaufes nahe dem Bereich der konzentrierten Anordnung der Anschlüsse gebildet sind.

2. Druckbehälter nach Anspruch 1, dadurch gekennzeichnet, daß im Druckmantel (5) Inspektionsöffnungen (11) nahe den Bereichen der konzentrierten Anordnung der Anschlüsse (6c) der Kühlwasser-Zuführungsleitungen (7c) und Kühlwasser-Abführungsleitungen vorgesehen sind.

## Claims

1. Pressure vessel, such as a pressurized reactor, pressurized waste heat boiler or the like, consisting of a pressure casing and, positioned within it, a heat exchange surface which is formed as a tube wall structure and is subdivided into individual cooling circuits with separate cooling water supply lines and cooling water discharge lines, characterized in that the connections (6c) of the cooling water supply lines (7c) and cooling water discharge lines to the tubes (8c) of the individual cooling circuits (1c) are positioned in a manner known per se so that in each case they are concentrated in one or more narrow regions of the tube wall structure of a cooling circuit between the tube wall structure and the pressure casing the connections (6c) of the cooling water supply lines (7c) and cooling waterdischarge lines being accessible from the interior space (2) of the tube wall structure (1) for purposes of repair through openings which are formed by removing a section (9, 10) of the tube wall structure of the cooling circuit involved near the region of the concentrated arrangement of the connections.

2. Pressure vessel according to Claim 1, characterized in that inspection openings (11) are provided in the pressure casing (5) near the regions of the concentrated arrangement of the connections (6c) of the cooling water supply lines (7c) and the cooling water discharge lines.

## Revendications

1. Récipient à pression, tel qu'un réacteur à pression ou une chaudière de récupération à pression, se composant d'une enveloppe à pression et d'une surface d'échange de chaleur disposée à l'intérieur de celle-ci, qui est constituée par une structure de paroi tubulaire et qui est subdivisée en circuits de refroidissement distincts avec des conduites séparées d'arrivée de l'eau de refroidissement et d'évacuation de l'eau de refroidissement, caractérisé en ce que les raccords (6c) des conduites (7c) d'arrivée de l'eau de refroidissement et des conduites d'évacuation de l'eau de refroidissement aux tubes (8c) des circuits de refroidissement distincts (1c) sont chacun concentrés d'une manière connue en soi en une ou plusieurs zones étroites de la structure de paroi tubulaire d'un circuit de refroidissement, entre la structure de paroi tubulaire et l'enveloppe à pression, les raccords (6c) des conduites (7c) d'arrivée de l'eau de refroidissement et des conduites d'évacuation de l'eau de refroidissement étant accessibles à partir du volume intérieur (2) de la structure de paroi tubulaire (1), aux fins de réparations, par des ouvertures qui sont formées par enlèvement d'une pièce (9, 10) de la structure de paroi tubulaire du circuit de refroidissement considéré, au voisinage de la zone où sont concentrés les raccords.

2. Récipient à pression suivant la revendication 1, caractérisé en ce qu'il est prévu dans l'enveloppe à pression (5) des ouvertures d'inspection (11) à proximité des zones où sont concentrés les raccords (6c) des conduites (7c) d'arrivée de l'eau de refroidissement et des conduites d'évacuation de l'eau de refroidissement.
